# EUROPEAN PATENT APPLICATION

(11) **EP 4 644 625 A1**
(43) Date of publication of application: **05.11.2025**
(21) Application number: 24787733.5
(22) Date of filing: 04.01.2024
(51) Int. Cl.: E03C 1/06, A47K 3/20, B05B 1/18, B05B 15/68

(54) **MOUNTING HOLDER AND SHOWER HEAD ASSEMBLY**

(30) Priority: 13.04.2023 CN 202320821193 U
(71) Applicant: Fujian Domoo Sanitary Ware Technology Co., Ltd, QuanZhou, Fujian 362304 (CN)
(72) Inventor: LIN, Xiaofa, Quanzhou, Fujian 362304 (CN); LIN, Xiaoshan, Quanzhou, Fujian 362304 (CN); CHEN, Zhiwei, Quanzhou, Fujian 362304 (CN); LIU, Qiqiao, Quanzhou, Fujian 362304 (CN); DENG, Xiaoqing, Quanzhou, Fujian 362304 (CN); LIANG, Pansheng, Quanzhou, Fujian 362304 (CN)
(74) Representative: Tansini, Elio Fabrizio
(86) International application number: PCT/CN2024/070536
(87) International publication number: WO 2024/212626

(57) **Abstract**

Provided are a mounting holder and a shower head assembly. The mounting holder (100) comprises: a base (1) provided with a mounting hole, the mounting hole being configured to accommodate a mounting base body (200) for mounting and matching with the mounting holder (100); a locking mechanism (3) mounted on the base (1), the locking mechanism (3) comprising a locking member and a transmission member (31), the locking mechanism (3) being configured to be in a locked state, such that the locking member can lock the mounting base body (200); and an operation button movably mounted on the base (1), the operation button and the locking member being located on both sides of the mounting hole, respectively, the transmission member (31) being arranged between the operation button and the locking member, the operation button being in transmission connection with the locking member by means of the transmission member (31), and the operation button being configured to be able to drive the locking member to move by means of the transmission member (31) during movement, such that the locking mechanism (3) can be in a released state, thereby enabling the locking member to be unlocked from the mounting base body (200).

## Description

The present application claims the priority of a Chinese Patent Application No. 202320821193.1 filed to CNIPA on April 13, 2023, and entitled "Mounting Holder and Shower Head Assembly", the content of which should be regarded as being incorporated herein by reference.

### Technical Field

The present disclosure relates to, but is not limited to, the field of support members, and particularly to, but is not limited to, a mounting holder and a shower head assembly.

### Background

In some cases, the shower head is mounted on a vertical mounting rod by a mounting holder, and the mounting rod is fixed to a wall. The height of the shower head is fixed, which is inconvenient to use.

### Summary

The following is a summary of the subject matter described in detail herein. This summary is not intended to limit the protection scope of the claims.

A mounting holder includes: a base provided with a mounting hole, the mounting hole being configured to accommodate a mounting base body for mounting and matching with the mounting holder; a locking mechanism mounted on the base, the locking mechanism including a locking member and a transmission member, the locking mechanism being configured to be able to be in a locked state, such that the locking member can lock the mounting base body; and an operation button movably mounted on the base. The operation button and the locking member are located on two sides of the mounting hole, respectively, the transmission member is arranged between the operation button and the locking member, and the operation button is in transmission connection with the locking member by the transmission member. The operation button is configured to be able to drive the locking member to move by the transmission member during rotation, such that the locking mechanism can be in a released state, thereby enabling the locking member to be unlocked from the mounting base body.

A shower head assembly includes a shower head and the mounting holder described above. The locking mechanism of the mounting holder is configured to be able to be lockingly matched with or unlocked from the mounting base body, and the shower head is configured to be mountable to the mounting holder.

Other aspects will become apparent after reading and understanding the drawings and detailed description.

### Brief Description of Drawings

FIG. 1 is a schematic view of a three-dimensional structure of a mounting holder according to an embodiment of the present application.
FIG. 2 is a schematic front view of the structure of the mounting holder shown in FIG. 1.
FIG. 3 is a schematic exploded view of the structure of the mounting holder shown in FIG. 1.
FIG. 4 is a schematic view of a cross-sectional structure taken along an A-A direction in FIG. 2, where a locking mechanism of the mounting holder is in a locked state.
FIG. 5 is a schematic view of a cross-sectional structure taken along a B-B direction in FIG. 4.
FIG. 6 is a schematic view of a cross-sectional structure taken along a C-C direction in FIG. 4.
FIG. 7 is a schematic view of a cross-sectional structure taken along an A-A direction in FIG. 2, where a locking mechanism of the mounting holder is in a released state.
FIG. 8 is a schematic view of a cross-sectional structure taken along a D-D direction in FIG. 7.
FIG. 9 is a schematic view of a cross-sectional structure taken along an A-A direction in FIG. 2, where a locking mechanism of the mounting holder is in another released state.
FIG. 10 is a schematic view of a cross-sectional structure taken along an E-E direction in FIG. 9.
FIG. 11 is a schematic view of a structure of a knob and a transmission member of the mounting holder shown in FIG. 1.
FIG. 12 is a schematic exploded view of a structure of a locking member of the mounting holder shown in FIG. 1.
FIG. 13 is another schematic exploded view of a structure of a locking member of the mounting holder shown in FIG. 1.
FIG. 14 is a schematic view of a structure of an inner shell of the mounting holder shown in FIG. 1.
FIG. 15 is a schematic view of a structure of a sheath of the mounting holder shown in FIG. 1.
FIG. 16 is a schematic view of an assembly structure of the mounting holder and the mounting base body shown in FIG. 1.
FIG. 17 is a schematic view of a cross-sectional structure of the assembly structure shown in FIG. 16.
FIG. 18 is a schematic view of a structure of a shower head assembly according to an embodiment of the present application.

Reference signs:
100-mounting holder, 200-mounting base body, 300-hand-held shower head, 400-top spray shower head;
1-base, 11-outer shell, 111-first mounting hole, 12-inner shell, 121-hook, 122-shaft hole, 123-second guiding part, 124-second mounting hole, 2-knob, 20-knob body, 21-protruding post, 211-driving part, 211a-first driving part, 211b-second driving part, 212-avoidance ramp, 22-chute, 23-rotating force application part, 3-locking mechanism, 31-transmission member, 311-drive-matching part, 311a-first drive-matching part, 311b-second drive-matching part, 312-pushing arm, 313-first guiding part, 32-swinging part, 321-rotating shaft part, 322-mounting cavity, 323-clamping groove, 324-mounting post, 33-locking part, 331-buckle, 332-locking surface, 333-first edge, 334-second edge, 34-elastic member, 4-sheath, 41-third mounting hole, 42-avoidance hole, 5-mounting seat, 51-mounting groove, 6-screw, 7-rubber gasket.

The realization of the objects, functional features and advantages of the present application are further explained with reference to the accompanying drawings in connection with the embodiments.

### Detailed Description

Embodiments of the present disclosure will be described in detail with reference to the accompanying drawings. It should be noted that the embodiments in the present application and the features in the embodiments may be arbitrarily combined with each other if there is no conflict.

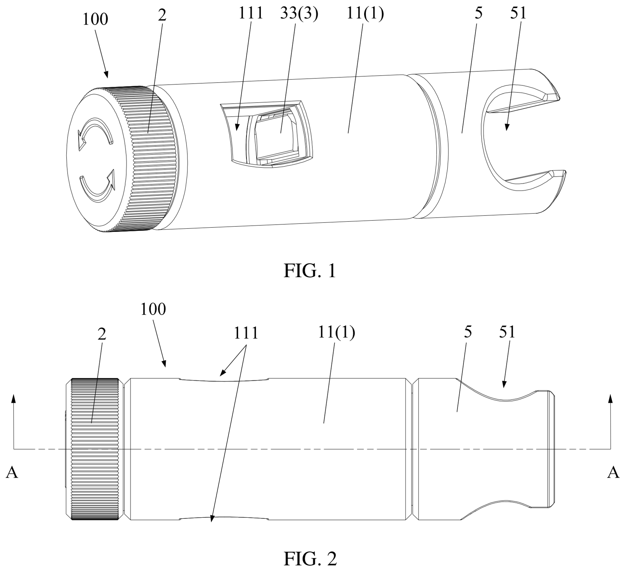

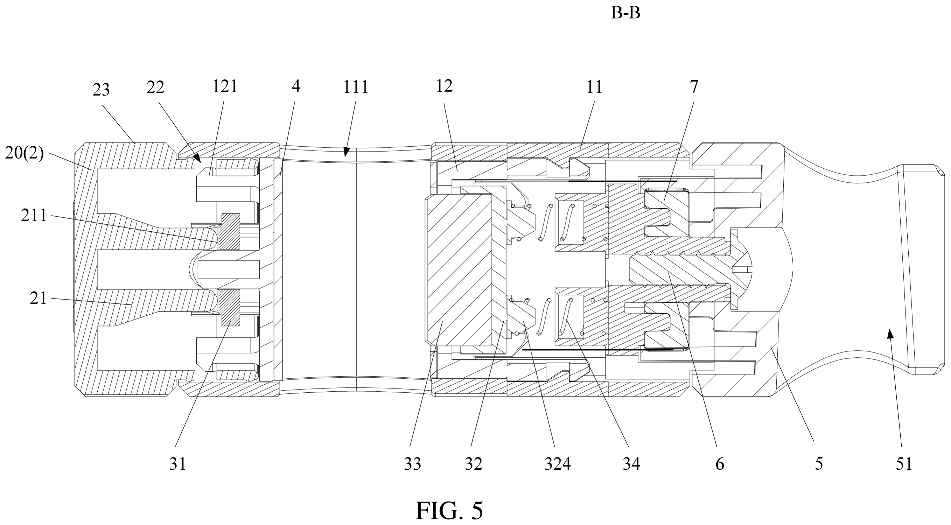

As shown in FIGS. 1 to 17, an embodiment of the present application provides a mounting holder 100, which includes a base 1, a locking mechanism 3, and an operation button.

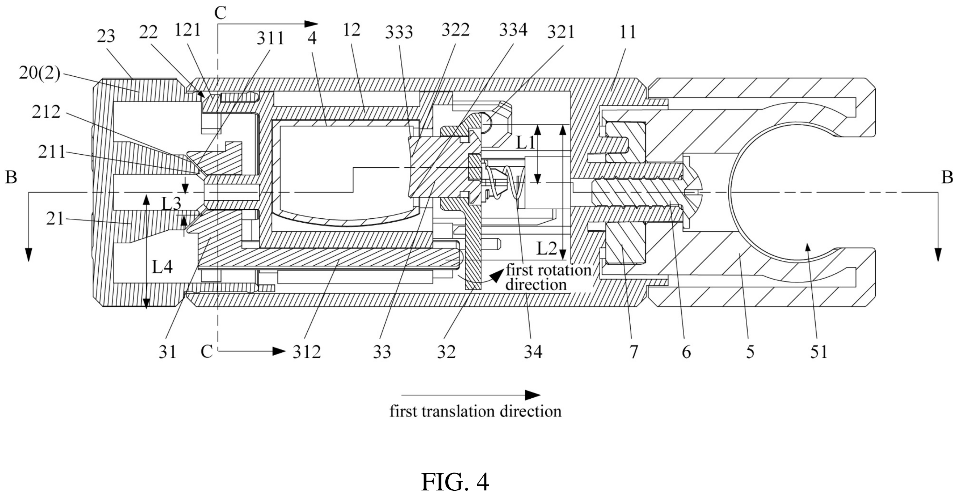

As shown in FIGS. 4, 7, 9, 16, and 17, the base 1 is provided with a mounting hole, the mounting hole is configured to accommodate a mounting base body 200, and the mounting base body 200 can be used for mounting and matching with the mounting holder 100.

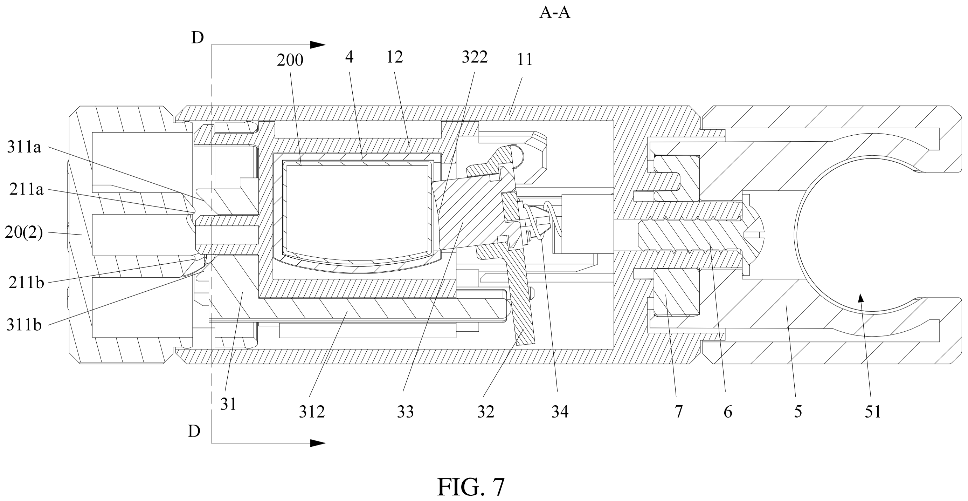

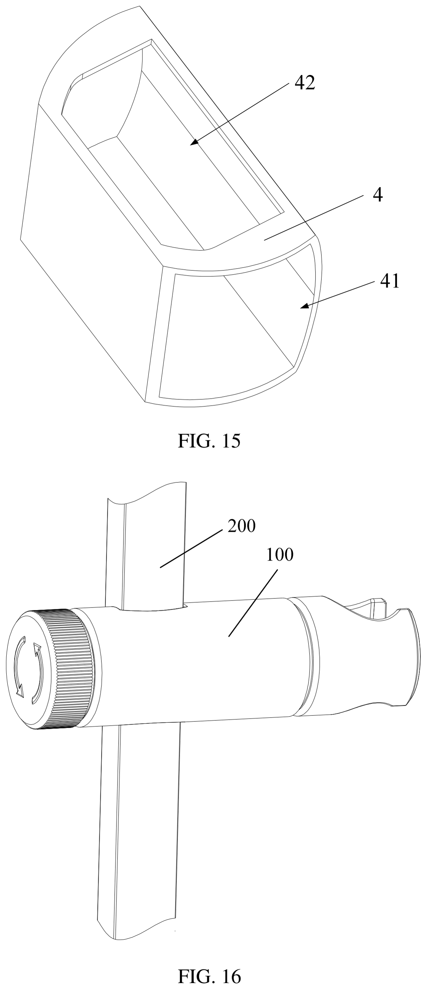

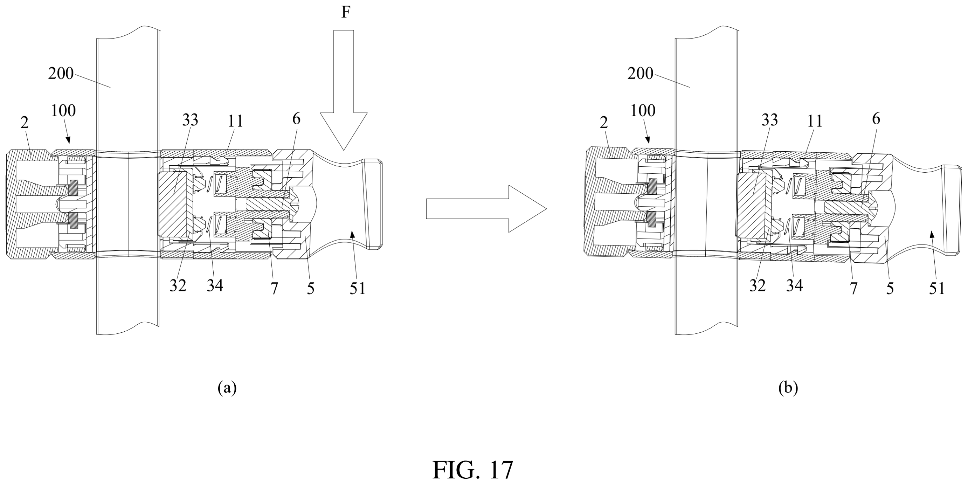

The locking mechanism 3 is mounted to the base 1, and the locking mechanism 3 has a locked state (as shown in FIGS. 4 to 6) and a released state (as shown in FIGS. 7 to 10). When the locking mechanism 3 is in the locked state, the locking mechanism 3 can be lockingly matched with the mounting base body 200 on which the mounting holder 100 is mounted (as shown in FIGS. 16 and 17), such that the mounting holder 100 is fixed on the mounting base body 200. When the locking mechanism 3 is in the released state, the locking mechanism 3 can be unlocked from the mounting base body 200, such that the mounting holder 100 is movable relative to the mounting base body 200, so as to adjust the position of the mounting holder 100.

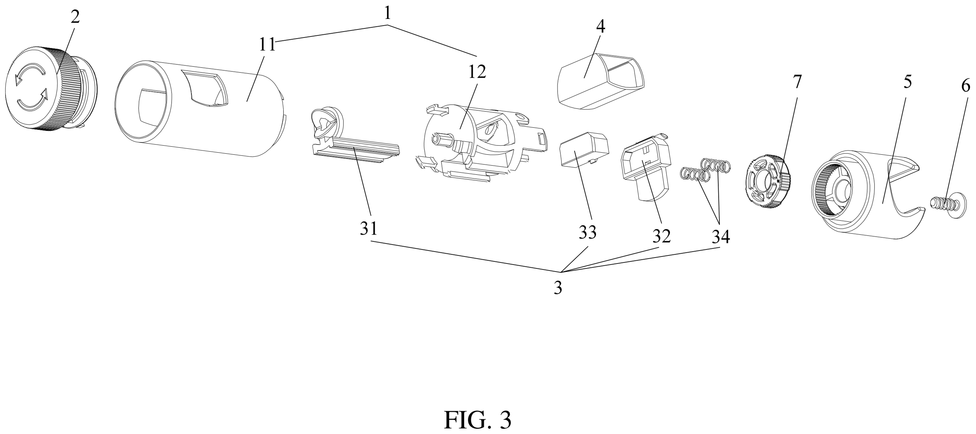

As shown in FIG. 3, the locking mechanism 3 includes: a locking member and a transmission member 31. The locking mechanism 3 is configured to be able to be in the locked state such that the locking member can lock the mounting base body 200. The locking mechanism 3 is also configured to be able to be in the released state such that the locking member can be unlocked from the mounting base body 200.

The operation button is movably mounted to the base 1, and the operation button and the locking member are respectively located on two sides of the mounting hole. The transmission member 31 is arranged between the operation button and the locking member, and the operation button can be in transmission connection with the locking member by the transmission member 31. The operation button is configured to be able to drive the locking member to move by the transmission member 31 when moving, such that the locking mechanism can be in the released state, thereby enabling the locking member to be unlocked from the mounting base body 200.

The operation button may be a knob 2 rotatably mounted to the base 1. The knob 2 is in transmission connection with the locking member through the transmission member 31, and the knob 2 and the locking member are respectively located on two sides of the mounting hole. The knob 2 is configured to be able to drive the locking member to move by the transmission member 31 when rotating, such that the locking member can be unlocked from the mounting base body 200, thereby enabling the locking mechanism to be in the released state.

Alternatively, the operation button may be a pressing button, and when the pressing button is pressed, the pressing button can drive the locking member to move by the transmission member 31, such that the locking member can be unlocked from the mounting base body 200. The following description is illustrated by an example in which the operation button is a knob.

In the mounting holder 100, during the rotation of the knob 2, the knob 2 can drive the locking member to move by the transmission member 31. This enables the locking member to be switched from a state of locking the mounting base body 200 to a state where it is unlocked from the mounting base body 200. That is, this enables the locking mechanism 3 to be switched from the locked state to the released state, so as to adjust the mounting position of the mounting holder 100 on the mounting base body 200. Consequently, when the mounting holder 100 is used for mounting the shower head, a mounting height of the shower head on the mounting base body 200 (such as a vertical mounting rod used for mounting the shower head) can be adjusted as required, thereby facilitating the users to use.

The knob 2 and the locking member are respectively located on two sides of the mounting hole, that is, the knob 2 and the locking member may be respectively located on two sides of the mounting base body 200. When arranging the knob 2 and the locking member on a same side of the mounting hole, in order to mount the locking member, a distance between a side of the base 1 close to the knob 2 and the mounting base body 200 is relatively long, while a distance between a side of the base 1 away from the knob 2 and the mounting base body 200 is relatively short. Consequently, when the side of the base 1 away from the knob 2 is used for mounting the member to be mounted, such as the shower head, a distance between the member to be mounted and the mounting base body 200 is relatively short, such that the mounting and picking-placing of the member to be mounted is inconvenient. Instead, when the knob 2 and the locking member are respectively located on two sides of the mounting hole, the distance between the side of the base 1 away from the knob 2 and the mounting base body 200 is relatively long, which is convenient for mounting and picking-placing of the member to be mounted.

In some exemplary embodiments, as shown in FIGS. 4 toll, the knob 2 may include a driving part 211. One end of the transmission member 31 is provided with a drive-matching part 311 that is in transmission matching with the driving part 211, and the other end of the transmission member 31 extends beyond the mounting hole and is in transmission matching with the locking member.

One end of the transmission member 31 is close to the knob 2, and the drive-matching part 311 may be provided at the end of the transmission member 31 close to the knob 2. The other end of the transmission member 31 extends in a direction away from the driving part 211, extends beyond the mounting hole and then is in transmission matching with the locking member. During the rotation of the knob 2, the driving part 211 of the knob 2 is in transmission matching with the drive-matching part 311 of the transmission member 31 to drive the transmission member 31 to move, and the transmission member 31 further drives the locking member to move, such that the locking mechanism 3 can be switched from the locked state to the released state, so as to adjust the mounting position of the mounting holder 100 on the mounting base body 200.

It should be understood that the transmission matching between the knob 2 and the transmission member 31 is not limited to the transmission matching realized by the driving part 211 and the drive-matching part 311. For example, in other exemplary embodiments, the transmission member and the operation button are of a split structure, and one end of the transmission member is connected with the operation button, and the other end of the transmission member extends beyond the mounting hole and is in transmission matching with the locking member. Alternatively, one end of the transmission member is integrally formed with the operation button, and the other end of the transmission member extends beyond the mounting hole and is in transmission matching with the locking member. One end of the transmission member can be connected with the operation button or integrally formed with the operation button, such that the transmission member and the operation button can move in unison. This ensures that when the operation button is actuated, it drives the transmission member to move, which in turn drives the locking member to move, thereby enabling the locking member to be unlocked from the mounting base body.

In some exemplary embodiments, at least one of the driving part 211 and the drive-matching part 311 is two in number, such that when the knob 2 is rotated in a second rotation direction and in a third rotation direction opposite to the second rotation direction, the locking mechanism 3 can be switched from the locked state to the released state. The second rotation direction and the third rotation direction are shown by the two-way arrow on the knob 2 in FIG. 1.

In the mounting holder 100, during the rotation of the knob 2, the driving part 211 of the knob 2 is in transmission matching with the drive-matching part 311 of the transmission member 31 to drive the transmission member 31 to move. This enables the locking mechanism 3 to be switched from the locked state to the released state, so as to adjust the mounting position of the mounting holder 100 on the mounting base body 200. Consequently, when the mounting holder 100 is used for mounting the shower head, a mounting height of the shower head on the mounting base body 200 (for example, a vertical mounting rod for mounting the shower head) can be adjusted as required, which is convenient for the users to use.

At least one of the driving part 211 and the drive-matching part 311 is two in number, such that when the knob 2 is rotated in the second rotation direction and the third rotation direction, the locking mechanism 3 can be switched from the locked state to the released state. As a result, the mounting holder 100 can be unlocked by rotating the knob 2 in both directions, and the unlocking operation of the mounting holder 100 can be further simplified.

In some exemplary embodiments, two driving parts 211 are provided, namely, a first driving part 211a and a second driving part 211b, respectively. One drive-matching part 311 is provided. The drive-matching part 311 is configured to be capable of being in transmission matching with the first driving part 211a when the knob 2 is rotated in the second rotation direction, such that the locking mechanism 3 can be switched from the locked state to the released state; and, in transmission matching with the second driving part 211b when the knob 2 is rotated in the third rotation direction, such that the locking mechanism 3 can be switched from the locked state to the released state.

In this mounting holder 100, two driving parts 211 and one drive-matching part 311 are provided. When the knob 2 is rotated in the second rotation direction, the first driving part 211a can be in transmission matching with the drive-matching part 311 such that the locking mechanism 3 can be switched from the locked state to the released state to realize the unlocking of the mounting holder 100. When the knob 2 is rotated in the third rotation direction, the second driving part 211b can be in transmission matching with the drive-matching part 311 such that the locking mechanism 3 can be switched from the locked state to the released state to realize the unlocking of the mounting holder 100.

In other exemplary embodiments, one driving part 211 is provided, and two drive-matching parts 311 are provided, namely a first drive-matching part 311a and a second drive-matching part 311b, respectively. The driving part 211 is configured to be capable of being in transmission matching with the first drive-matching part 311a when the knob 2 is rotated in the second rotation direction, such that the locking mechanism 3 can be switched from the locked state to the released state; and in transmission matching with the second drive-matching part 311b when the knob 2 is rotated in the third rotation direction, such that the locking mechanism 3 can be switched from the locked state to the released state.

In this mounting holder 100, one driving part 211 is provided, and two drive-matching parts 311 are provided. When the knob 2 is rotated in the second rotation direction, the driving part 211 can be in transmission matching with the first drive-matching part 311a, such that the locking mechanism 3 can be switched from the locked state to the released state to realize the unlocking of the mounting holder 100. When the knob 2 is rotated in the third rotation direction, the driving part 211 can be in transmission matching with the second drive-matching part 311b, such that the locking mechanism 3 can be switched from the locked state to the released state to realize the unlocking of the mounting holder 100.

In some other exemplary embodiments, two driving parts 211 are provided, namely, namely a first driving part 211a and a second driving part 211b, respectively; and two drive-matching parts 311 are provided, namely, a first drive-matching part 311a and a second drive-matching part 311b, respectively. The first driving part 211a is configured to be capable of being in transmission matching with the first drive-matching part 311a when the knob 2 is rotated in the second rotation direction, such that the locking mechanism 3 can be switched from the locked state to the released state. The second driving part 211b is configured to be capable of being in transmission matching with the second drive-matching part 311b when the knob 2 is rotated in the third rotation direction, such that the locking mechanism 3 can be switched from the locked state to the released state.

In this mounting holder 100, two driving parts 211 and two drive-matching parts 311 are provided. When the knob 2 is rotated in the second rotation direction, the first driving part 211a can be in transmission matching with the first drive-matching part 311a, such that the locking mechanism 3 can be switched from the locked state to the released state to realize the unlocking of the mounting holder 100. When the knob 2 is rotated in the third rotation direction, the second driving part 211b can be in transmission matching with the second drive-matching part 311b, such that the locking mechanism 3 can be switched from the locked state to the released state to realize the unlocking of the mounting holder 100.

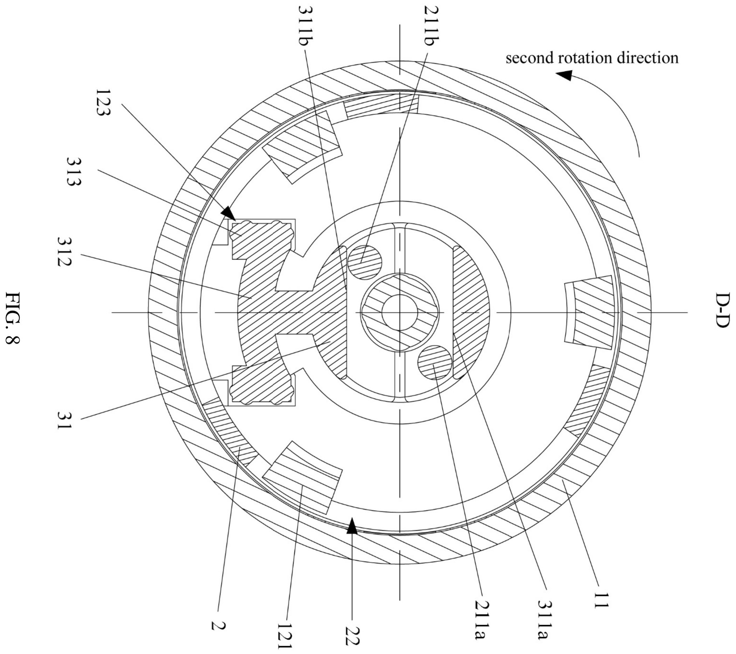

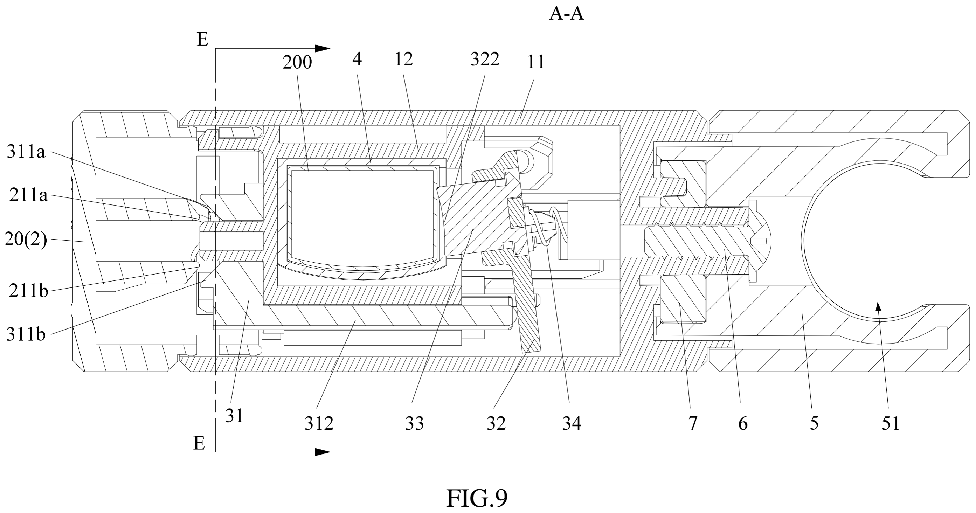

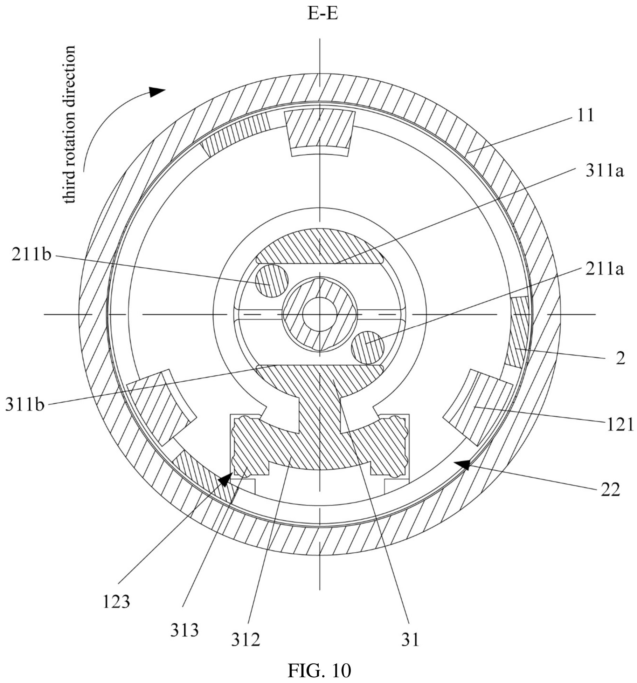

In still other exemplary embodiments, as shown in FIGS. 4 to 11, two driving parts 211 are provided, namely, a first driving part 211a and a second driving part 211b, respectively; and two drive-matching parts 311 are provided, namely, a first drive-matching part 311a and a second drive-matching part 311b, respectively. The first driving part 211a and the second driving part 211b are configured to be in transmission matching with the first drive-matching part 311a and the second drive-matching part 311b respectively when the knob 2 is rotated in the second rotation direction (as shown in FIG. 8), such that the locking mechanism 3 can be switched from the locked state (as shown in FIG. 4) to the released state (as shown in FIG. 7); and in transmission matching with the second drive-matching part 311b and the first drive-matching part 311a respectively when the knob 2 is rotated in the third rotation direction (as shown in FIG. 10), such that the locking mechanism 3 can be switched from the locked state (as shown in FIG. 4) to the released state (as shown in FIG. 9).

**In** this mounting holder 100, two driving parts 211 and two drive-matching parts 311 are provided. As shown in FIG. 8, when the knob 2 is rotated in the second rotation direction (counterclockwise direction as indicated by the curved arrow in FIG. 8), the first driving part 211a can be in transmission matching with the first drive-matching part 311a, while the second driving part 211b can be in transmission matching with the second drive-matching part 311b, such that the locking mechanism 3 can be switched from the locked state shown in FIG. 4 to the released state shown in FIG. 7 to realize the unlocking of the mounting holder 100. As shown in FIG. 10, when the knob 2 is rotated in the third rotation direction (clockwise direction as indicated by the curved arrow in FIG. 10), the first driving part 211a can be in transmission matching with the second drive-matching part 311b, while the second driving part 211b can be in transmission matching with the first drive-matching part 311a, such that the locking mechanism 3 can be switched from the locked state shown in FIG. 4 to the released state shown in FIG. 9 to realize the unlocking of the mounting holder 100.

In some exemplary embodiments, the transmission member 31 is slidably connected with the base 1, and the transmission member 31 is configured to be capable of sliding in a first direction relative to the base 1 under the driving of the operation button (knob 2), such that the locking member is unlocked from the mounting base body 200. The transmission member 31 is also configured to be capable of sliding in a direction opposite to the first direction relative to the base 1 under the action of an elastic member 34.

The first direction may be a linear direction (i.e., a first translation direction), such that the transmission member 31 can reciprocally slide along a straight line relative to the base 1 (i.e., reciprocally translate along the first translation direction) under the driving of the operation button (knob 2) and the elastic member 34. Alternatively, the first direction may be a curve direction (such as an arc direction), that is, the transmission member 31 can reciprocally slide along a curve (such as an arc line) relative to the base 1 under the driving of the operation button (knob 2) and the elastic member 34.

In an exemplary embodiment, as shown in FIGS. 4, 7 and 9, the transmission member 31 is slidably connected with the base 1, and the transmission member 31 is configured to be able to translate along a first translation direction (a rightward direction of the drawings shown in FIGS. 4, 7 and 9, that is, an upward direction of the page on which FIGS. 4, 7 and 9 are located, as shown by a straight arrow in FIG. 4) to unlock the locking member from the mounting base body 200. The transmission member 31 is also configured to be able to translate along a direction opposite to the first translation direction (a leftward direction of the drawings shown in FIGS. 4, 7 and 9, that is, a downward direction of the page on which FIGS. 4, 7 and 9 are located) to restore the locking member to lock the mounting base body 200. The transmission member 31 translates in the first translation direction and in the direction opposite to the first translation direction, such that the locking mechanism 3 can be switched between the locked state and the released state.

The transmission member 31 is configured to be able to translate in the first translation direction when the knob 2 is rotated in both the second rotation direction and the third rotation direction.

In the mounting holder 100, the transmission member 31 is slidably connected with the base 1, such that the transmission member 31 can slide reciprocally and translationally in the first translation direction and the direction opposite to the first translation direction relative to the base 1. This allows the locking mechanism 3 to be switched between the locked state and the released state. That is, when the transmission member 31 slides translationally in the first translation direction relative to the base 1, the locking mechanism 3 can be switched from the locked state to the released state; when the transmission member 31 slides translationally in the direction opposite to the first translation direction relative to the base 1, the locking mechanism 3 can be switched from the released state to the locked state.

When the knob 2 is rotated in the second rotation direction and the third rotation direction, the transmission member 31 translates in the first translation direction under the transmission matching of the driving part 211 and the drive-matching part 311, such that the mounting holder 100 can be unlocked by rotating the knob 2 in both directions.

In some exemplary embodiments, as shown in FIGS. 4 to 11, the driving part 211 includes a driving surface, and the driving surface is an arc-shaped surface or a flat surface. The drive-matching part 311 includes a drive-matching surface that is an arc-shaped surface or a flat surface, and the drive-matching surface is configured to be pressed against the driving surface for transmission matching. The arc-shaped surface may be a spherical surface or other non-spherical arc-shaped surface, and the flat surface may be an inclined flat surface inclined with respect to a rotation axis of the knob 2.

In the mounting holder 100, the driving surface of the driving part 211 and the drive-matching surface of the drive-matching part 311 may be arc-shaped surfaces or flat surfaces. When the knob 2 is rotated, the driving surface can come into contact with the drive-matching surface and push the drive-matching surface to move, thereby realizing transmission matching between the driving surface and the drive-matching surface.

In some exemplary embodiments, as shown in FIGS. 4 to 11, the driving part 211 includes a driving surface that is a spherical surface arranged eccentrically with respect to the rotation axis of the knob 2. The drive-matching part 311 includes a drive-matching surface that is an inclined flat surface inclined with respect to the rotation axis of the knob 2, and the drive-matching surface is configured to be able to be tangent to and in transmission matching with the driving surface, such that the transmission member 31 can be translate in the first translation direction under the driving of the rotating knob 2.

In the mounting holder 100, the knob 2 is rotatable, and the knob 2 includes a spherical driving part 211 arranged eccentrically with respect to the rotation axis of the knob 2 (that is, the rotation axis of the knob 2 does not pass through a spherical center of the spherical driving part 211). An outer surface of the spherical driving part 211 is a spherical surface that can form the driving surface of the knob 2 such that the driving part 211 can rotate about the rotation axis of the knob 2 when the knob 2 is rotated.

The transmission member 31 includes a drive-matching part 311, and the drive-matching surface of the drive-matching part 311 may be an inclined flat surface inclined with respect to the rotation axis of the knob 2 (i.e., the inclined flat surface is not perpendicular or parallel to the rotation axis of the knob 2). The drive-matching surface can be tangent to and in transmission matching with the outer surface of the spherical driving part 211 when the knob 2 is rotated, such that the transmission member 31 can be driven to translate along the first translation direction when the knob 2 is rotated, and then the locking mechanism 3 can be switched from the locked state to the released state, so as to adjust the mounting position of the mounting holder 100 on the mounting base body 200.

In the mounting holder 100, the driving surface of the knob 2 and the drive-matching surface of the transmission member 31 are always in a tangent state during the rotation of the knob 2, such that the transmission force between the driving surface and the drive-matching surface is optimized.

In some exemplary embodiments, as shown in FIGS. 4 to 11, two driving parts 211 are provided, namely, a first driving part 211a and a second driving part 211b, respectively; and the two driving parts 211 are arranged symmetrically with respect to the rotation axis of the knob 2. Accordingly, two drive-matching parts 311 are provided, namely, a first drive-matching part 311a and a second drive-matching part 311b, respectively; and the two drive-matching parts 311 are arranged symmetrically with respect to the rotation axis of the knob 2.

The two driving parts 211 are located between the two drive-matching parts 311. The driving surfaces of the first driving part 211a and the second driving part 211b are configured to be tangent to and in transmission matching with the drive-matching surfaces of the first drive-matching part 311a and the second drive-matching part 311b respectively when the knob 2 is rotated in the second rotation direction, as shown in FIGS. 7 and 8, such that the transmission member 31 translates in the first translation direction, and then the locking mechanism 3 can be switched from the locked state to the released state. Alternatively, the driving surfaces of the first driving part 211a and the second driving part 211b are configured to be in transmission matching with the drive-matching surfaces of the second drive-matching part 311b and the first drive-matching part 311a respectively when the knob 2 is rotated in the third rotation direction that is opposite to the second rotation direction, as shown in FIGS. 9 and 10, such that the transmission member 31 translates in the first translation direction, and then the locking mechanism 3 can be switched from the locked state to the released state.

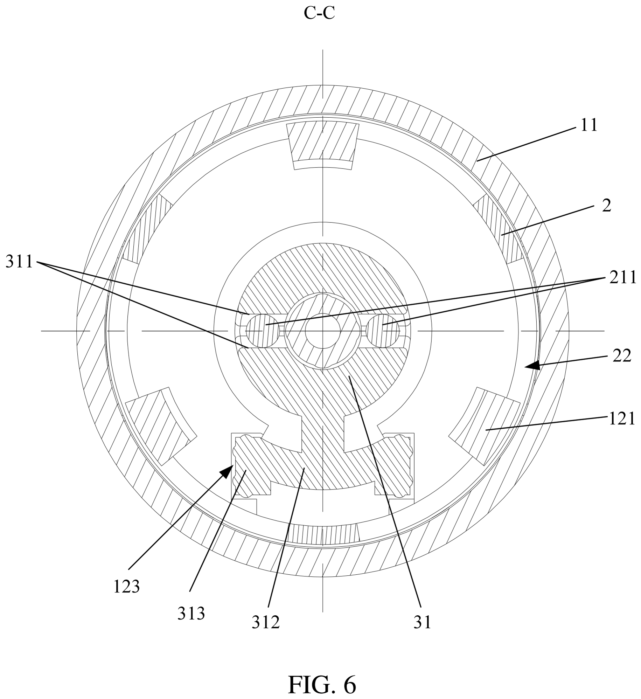

In the mounting holder 100, the knob 2 includes two driving parts 211, and the two driving parts 211 are arranged symmetrically with respect to the rotation axis of the knob 2, such that the driving surfaces of the two driving parts 211 are also arranged symmetrically with respect to the rotation axis of the knob 2. The transmission member 31 includes two drive-matching parts 311, and the two drive-matching parts 311 are arranged symmetrically with respect to the rotation axis of the knob 2, such that the drive-matching surfaces of the two drive-matching parts 311 are also arranged symmetrically with respect to the rotation axis of the knob 2. The transmission member 31 can reciprocally translate relative to the base 1 in the first translation direction and in the direction opposite to the first translation direction. The first translation direction may be parallel to the rotation axis of the knob 2. In the mounting holder 100, as shown in FIG. 6, two driving parts 211 are located between two drive-matching parts 311. As shown in FIG. 8, when the knob 2 is rotated in the second rotation direction, the driving surface of the first driving part 211a of the two driving parts 211 can be tangent to and in transmission matching with the drive-matching surface of the first drive-matching part 311a of the two drive-matching parts 311, and the driving surface of the second driving part 211b of the two driving parts 211 can be tangent to and in transmission matching with the drive-matching surface of the second drive-matching part 311b of the two drive-matching parts 311. **In** this way, the two driving parts 211 can push the transmission member 31 to translate in the first translation direction by respectively pushing the two drive-matching parts 311, and then the locking mechanism 3 can be switched from the locked state shown in FIG. 4 to the released state shown in FIG. 7, so as to adjust the mounting position of the mounting holder 100 on the mounting base body 200. As shown in FIG. 10, when the knob 2 is rotated in the third rotation direction, the driving surface of the first driving part 211a of the two driving parts 211 can be tangent to and in transmission matching with the drive-matching surface of the second drive-matching part 311b of the two drive-matching parts 311, and the driving surface of the second driving part 211b of the two driving parts 211 can be tangent to and transmission matching with the drive-matching surface of the first drive-matching part 311a of the two drive-matching parts 311. In this way, the two driving parts 211 can push the transmission member 31 to translate in the first translation direction by respectively pushing the two drive-matching parts 311, and then the locking mechanism 3 can be switched from the locked state shown in FIG. 4 to the released state shown in FIG. 9, so as to adjust the mounting position of the mounting holder 100 on the mounting base body 200.

In the mounting holder 100, two driving parts 211 and two drive-matching parts 311 symmetrically arranged with respect to the rotation axis of the knob 2 are provided. In this way, when the knob 2 is rotated in the second rotation direction or the third rotation direction, the two driving parts 211 of the knob 2 can always be in a tangent state with the two drive-matching parts 311, respectively, such that the transmission force is optimized. Further, two driving parts 211 can drive the transmission member 31 to translate towards the same direction (first translation direction) by the two drive-matching parts 311, respectively, thereby enabling the locking mechanism 3 to be switched from the locked state to the released state. Through the above design, it is easy to unlock the mounting holder 100 by rotating the knob 2 in both directions, so as to adjust the mounting position of the mounting holder 100, and the operation is simple.

In addition, when the knob 2 is rotated, the driving surfaces of the two driving parts 211 are in contact with and matched with the drive-matching surfaces of the two drive-matching parts 311 respectively, and the two contact points are fulcrums for each other. This arrangement prevents the transmission member 31 from being deviated during translation, such that the rotational movement of the knob 2 and the translational movement of the transmission member 31 are smooth, thereby further facilitating the smooth switching of the locking mechanism 3 between the locked state and the released state.

In some exemplary embodiments, as shown in FIGS. 4, 7, 9, and 11, along a direction away from the knob 2, the drive-matching surfaces of two drive-matching parts 311 are inclined in a direction close to the rotation axis of the knob 2. The drive-matching surfaces of the two drive-matching parts 311 may be inclined flat surfaces inclined with respect to the rotation axis of the knob 2, and the drive-matching surfaces of the two drive-matching parts 311 may be V-shaped as a whole.

As shown in FIGS. 4 to 5, 7, 9, and 11, the knob 2 is provided with a protruding post 21, and two driving parts 211 are provided at a protruding end of the protruding post 21. As shown in FIG. 6, the driving surface of each driving part 211 is configured to be tangent to each of the drive-matching surfaces of two drive-matching parts 311 when the locking mechanism 3 is in the locked state. As shown in FIGS. 4, 7, 9, and 11, an end surface of the protruding end of the protruding post 21 include two avoidance ramps 212 positioned between the two driving parts 211, and the two avoidance ramps 212 are configured to face the drive-matching surfaces of the two drive-matching parts 311 respectively when the locking mechanism 3 is in the locked state (as shown in FIG. 4).

As shown in FIGS. 4, 7, 9 and 11, the knob 2 may further include a knob body 20, which may be a knob cover including an end wall and an annular side wall connected to an edge of the end wall. An inner surface of the end wall is provided with a protruding post 21, and a central axis of the protruding post 21 may coincide with the rotation axis of the knob 2. The end surface of the protruding end of the protruding post 21 are provided with two driving parts 211 and two avoidance ramps 212 located between the two driving parts 211. An included angle between the two driving parts 211 is 180 degrees, such that the two driving parts 211 are arranged symmetrically with respect to the rotation axis of the knob 2. As shown in FIG. 6, when the locking mechanism 3 is in the locked state, the two driving parts 211 are located between the two drive-matching parts 311, and the driving surface of each driving part 211 can be tangent to the drive-matching surfaces of the two drive-matching parts 311 at the same time. This ensures that when the knob 2 is rotated in the second rotation direction or the third rotation direction, either driving part 211 can immediately realize the transmission matching with the first drive-matching part 311a or the second drive-matching part 311b to avoid idle stroke. Further, as shown in FIG. 4, when the locking mechanism 3 is in the locked state, the two avoidance ramps 212 may face the two drive-matching parts 311, respectively, and the two avoidance ramps 212 may be parallel to the two drive-matching parts 311, respectively, so as not to affect the tangency between the driving parts 211 and the drive-matching parts 311.

In some exemplary embodiments, as shown in FIGS. 3 to 4, the knob body 20 of the knob 2 can be rotatably connected to the base 1, the knob body 20 is connected with the driving part 211, and a central axis of the knob body 20 coincides with the rotation axis of the knob 2.

The knob body 20 of the knob 2 may be a knob cover and may be symmetrical with respect to a central axis. An end wall of the knob cover may be circular, an annular side wall of the knob cover may be in a shape of circular ring, and a central axis of the end wall and a central axis of the annular side wall of the knob cover coincide with each other and form a central axis of the knob cover. The knob 2 is rotatable about the central axis of the knob cover, that is, the central axis of the knob cover (knob body 20) coincides with the rotation axis of the knob 2. Compared to the rotation of the knob 2 about another axis other than the central axis of the knob body 20, which would result in a larger rotation space of the knob 2, arranging the knob 2 to rotate about the central axis of the knob body 20 can reduce the required rotation space of the knob 2 .

In some exemplary embodiments, as shown in FIG. 3, the locking mechanism 3 includes an elastic member 34 in addition to the locking member and the transmission member 31.

As shown in FIGS. 4 to 5, 7, 9, 12 to 13, and 17, the locking member includes a swinging part 32 rotatably connected to the base 1, and a locking part 33 disposed on the swinging part 32. The swinging part 32 can swing relative to the base 1 to drive the locking part 33 to move, such that the locking part 33 can be lockingly matched with the mounting base body 200, and the locking mechanism 3 is in a locked state. The swinging part 32 can also drive the locking part 33 to move, such that the locking part 33 is unlocked from the mounting base body 200, and the locking mechanism 3 is in a released state.

As shown in FIGS. 4 to 5, 7, 9, and 17, the elastic member 34 is disposed between the swinging part 32 and the base 1. The swinging part 32 is configured to be in a locked position under the action of the elastic force of the elastic member 34, such that the locking part 33 can be lockingly matched with the mounting base body 200.

As shown in FIGS. 4 to 11 and 17, the transmission member 31 may include a drive-matching part 311 and a pushing arm 312. The pushing arm 312 is slidably matched with the base 1 and is configured to be translatable relative to the base 1 in the first translation direction under the driving of the driving part 211. The drive-matching part 311 is disposed at one end of the pushing arm 312 close to the knob 2. The swinging part 32 is in transmission matching with one end of the pushing arm 312 away from the knob 2, and is configured to be rotatable to a released position in the first rotation direction (counterclockwise direction as indicated by the curved arrow in FIG. 4) against the elastic force of the elastic member 34 under the pushing of the pushing arm 312, such that the locking part 33 can be unlocked from the mounting base body 200.

In the locking mechanism 3, the transmission member 31 is slidably matched with the base 1, and the drive-matching part 311 of the transmission member 31 can be in transmission matching with the driving part 211 of the knob 2, such that when the knob 2 is rotated in the second rotation direction or the third rotation direction, the transmission member 31 can be driven to translate along the first translation direction, and then the pushing arm 312 can translate. The swinging part 32 of the locking member can be subjected to the elastic force of the elastic member 34 and the pushing force of the pushing arm 312. When the knob 2 is rotated, the pushing arm 312 translating in the first translation direction can push the swinging part 32 to rotate towards the first rotation direction (counterclockwise direction as shown by the curve arrow in FIG. 4) and overcome the elastic force of the elastic member 34, and the swinging part 32 can be rotated to the released position (as shown in FIGS. 7 and 9) under the pushing of the pushing arm 312, such that the locking part 33 can be unlocked from the mounting base body 200 to adjust the mounting position of the mounting holder 100 on the mounting base body 200. When the knob 2 is released, the swinging part 32 can be rotated to the locked position (as shown in FIG. 4) in the direction opposite to the first rotation direction under the action of the elastic force of the elastic member 34, and maintained in the locked position, such that the locking part 33 can be lockingly matched with the mounting base body 200, and the mounting holder 100 can be fixed on the mounting base body 200. Meanwhile, the swinging part 32 rotated in the direction opposite to the first rotation direction can push the transmission member 31 to translate to an initial position in a direction opposite to the first translation direction, and the drive-matching part 311 of the transmission member 31 drives the knob 2 to rotate and reset by the driving part 211.

In the mounting holder 100 according to the embodiment of the present application, the locking mechanism 3 thereof is configured such that when the knob 2 is rotated in the second rotation direction or the third rotation direction, the mounting holder 100 can be unlocked so as to adjust the position of the mounting holder 100. The locking mechanism 3 is also configured such that when the knob 2 is released, the swinging part 32 of the locking member is rotated under the action of the elastic force of the elastic member 34 and pushes the transmission member 31 to reset, and the drive-matching part 311 of the transmission member 31 drives the knob 2 to rotate and reset.

Through the above design, it is possible to unlock the mounting holder 100 by rotating the knob 2 in both directions, so as to adjust the position of the mounting holder 100. When the knob 2 is released, the mounting holder 100 can be automatically locked, such that the position adjustment operation of the mounting holder 100 is easy.

It should be understood that the transmission member 31 may be a translation member slidably connected to the base 1, or may be of other forms. For example, the transmission member may be a linkage mechanism, and the linkage structure may include an output end connected with the swinging part, and the output end may rotate to drive the swinging part to rotate. Alternatively, the transmission member may be other forms of rotating members.

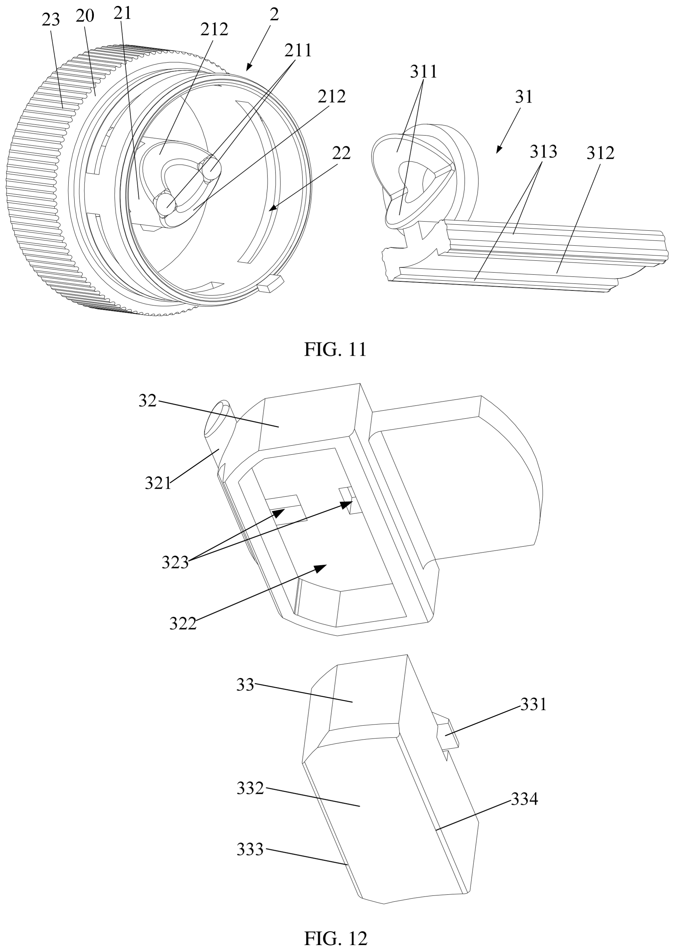

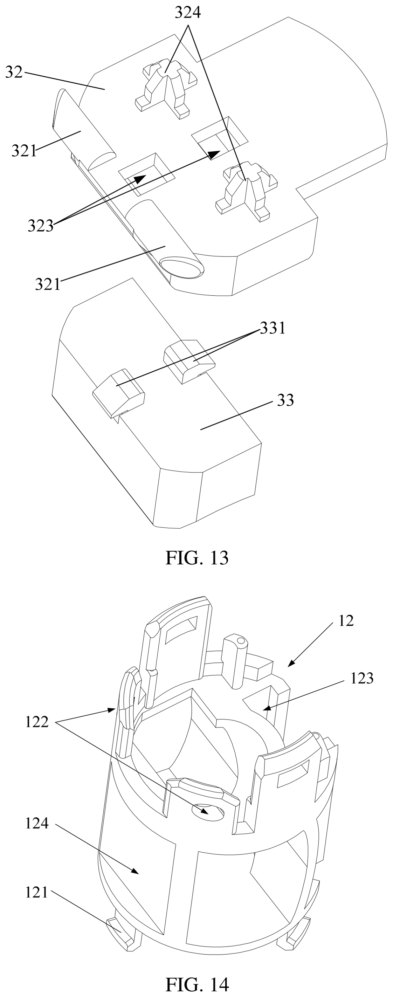

In some exemplary embodiments, as shown in FIGS. 12 and 13, two rotating shaft parts 321 are provided on the swinging part 32. As shown in FIG. 14, the base 1 (e.g., an inner shell 12 of the base 1, described in detail below) may be provided with two shaft holes 122. The two rotating shaft parts 321 can be mounted in the two shaft holes 122, respectively, and can freely rotate in the shaft holes 122, so as to realize the rotational connection between the swinging part 32 and the base 1. Alternatively, the rotating shaft parts may be provided on the base 1, and the shaft holes may be provided in the swinging part 32.

As shown in FIGS. 12 and 13, the locking part 33 may be a friction block, and the swinging part 32 is also provided with a mounting cavity 322 for mounting the locking part 33. A cavity wall of the mounting cavity 322 is provided with a clamping groove 323, and the locking part 33 is provided with a buckle 331, which can be clamped with the clamping groove 323 such that the locking part 33 is fixedly mounted to the mounting cavity 322 to form the locking member. The locking part 33 may include a locking surface 332, a portion of the locking part 33 may protrude from the mounting cavity 322, and an end surface of the protruded end may form the locking surface 332. The locking surface 332 may be press-fitted with a surface of the mounting base body 200, so as to realize the fixation of the mounting holder 100 on the mounting base body 200 by using a friction force between the locking part 33 and the mounting base body 200. A shape of the locking surface 332 may be configured to adapt to a surface of the mounting base body 200. For example, the locking surface 332 may be configured as a concave curved surface, or the locking surface 332 may be configured as another shape, such as a flat surface or convex curved surface.

In the embodiment shown in FIGS. 12 and 13, the locking part 33 and the swinging part 32 are of a split structure, and the locking part 33 is mounted and fixed to the swinging part 32. Alternatively, the locking part and the swinging part may be of an integral structure, that is, a portion of the swinging part may form the locking part.

As shown in FIGS. 3, 5 and 13, the elastic member 34 may include two springs, and two mounting posts 324 may be provided on the swinging part 32. One end of each of the two springs may be sleeved outside the two mounting posts 324 respectively, such that the springs exert elastic force on the swinging part 32.

In some exemplary embodiments, as shown in FIGS. 4, 7, 9 and 11, the base 1 is provided with a mounting hole, the mounting hole is configured for mounting the mounting base body 200 so as to be mounted and matched with the mounting base body 200, and the knob 2 and the locking member are respectively located on two sides of the mounting hole. The drive-matching part 311 is disposed at a first end of the pushing arm 312 close to the knob 2, and a second end of the pushing arm 312 extends in a direction away from the driving part 211, and is in transmission matching with the swinging part 32.

The pushing arm 312 can extend entirely along the rotation axis of the knob 2, and the drive-matching part 311 is disposed at one end of the pushing arm 312 close to the knob 2 (that is, the first end of the pushing arm 312). The other end of the pushing arm 312 (that is, the second end of the pushing arm 312) extends in a direction away from the driving part 211, and is in transmission matching with the swinging part 32. The pushing arm 312 can translate along the first translation direction toward a side away from the driving part 211 under the pushing of the driving part 211 of the knob 2, and the pushing arm 312 can push the swinging part 32 to swing such that the swinging part 32 moves to the released position.

The pushing arm 312 extends entirely along the rotation axis of the knob 2, and the knob 2 and the locking member are respectively located at two ends of the pushing arm 312. A portion of the base 1 located between the knob 2 and the locking member can be provided with the mounting hole and used for mounting the mounting base body 200, and the mounting base body 200 is locked by the locking member.

The pushing arm 312 is arranged such that the knob 2 and the locking member can be located on two sides of the mounting hole, respectively, that is, the knob 2 and the locking member can be located on two sides of the mounting base body 200, respectively. When arranging the knob 2 and the locking member on the same side of the mounting hole, in order to mount the locking member, a distance between a side of the base 1 close to the knob 2 and the mounting base body 200 is relatively long, while a distance between a side of the base 1 away from the knob 2 and the mounting base body 200 is relatively short. Consequently, when the side of the base 1 away from the knob 2 is used for mounting the member to be mounted, such as the shower head, a distance between the member to be mounted and the mounting base body 200 is relatively short, such that the picking-placing of the member to be mounted is inconvenient. Instead, when the knob 2 and the locking member are respectively located on two sides of the mounting hole, a distance between the side of the base 1 away from the knob 2 and the mounting base body 200 is relatively long, which is convenient for picking-placing of the members to be mounted.

In some exemplary embodiments, a distance between the elastic member 34 and the rotation axis of the swinging part 32 is smaller than a distance between the pushing arm 312 and the rotation axis of the swinging part 32.

As shown in FIG. 4, the distance between the elastic member 34 and the rotation axis of the swinging part 32 (that is, a distance between a center line of the elastic member 34 and the rotation axis of the swinging part 32) is L1, and the distance between the pushing arm 312 and the rotation axis of the swinging part 32 (that is, a distance between a center line of the pushing arm 312 and the rotation axis of the swinging part 32) is L2, where L1<L2. This arrangement ensures that the force application point of the pushing arm 312 acting on the swinging part 32 is much farther from the rotation axis of the swinging part 32 than the point application point of the elastic member 34 acting on the swinging part 32, thereby achieving a lever force-saving effect.

In some exemplary embodiments, the knob 2 may further include an operable rotating force application part 23 for rotating the knob 2. A distance between the rotating force application part 23 and the rotation axis of the knob 2 is larger than a distance between the driving part 211 and the rotation axis of the knob 2.

As shown in FIGS. 4 and 11, an outer wall surface of the annular side wall of the knob body 20 may form the rotating force application part 23 of the knob 2, and the knob 2 may be rotated by applying force on the rotating force application part 23. The rotating force application part 23 may be provided with an anti-slip structure (including anti-slip ribs and/or grooves) to prevent the knob 2 from slipping when rotating.

As shown in FIG. 4, the outer wall surface of the annular side wall of the knob 2 forming the rotating force application part 23 is a circular ring-shaped surface and a central axis thereof coincides with the rotation axis of the knob 2. A distance between the rotating force application part 23 and the rotation axis of the knob 2 is L4, a distance between the driving part 211 and the rotation axis of the knob 2 (that is, a distance between a spherical center of the driving part 211 and the rotation axis of the knob 2) is L3, and L4 > L3, such that an outer diameter of the knob 2 is larger than a distance between the spherical centers of the two spherical driving parts 211. L4 > L3, such that a lever effort-saving effect can be achieved when the knob 2 is rotated, the two driving parts 211 are fulcrums for each other, and a double lever effect can be achieved when the knob 2 is rotated, greatly optimizing a torque required for rotating the knob 2, and causing the rotation operation of the knob 2 smooth and convenient.

In some exemplary embodiments, the rotation axis of the swinging part 32 extends in an upright direction, and the elastic member 34 and the transmission member 31 are configured to be able to apply a force in a direction intersecting the upright direction to the swinging part 32. The elastic member 34 and the transmission member 31 are located on two sides of the swinging part 32, respectively. The elastic member 34 is located on a side of the swinging part 32 away from the operation button (rotation 2) and the transmission member 31 is located on a side of the swinging part 32 close to the operation button (rotation 2).

The rotation axis of the swinging part 32 extends in the upright direction, that is, the rotation axis of the swinging part 32 may completely coincide with a vertical direction (coincide with a gravity direction) or be inclined at an angle with respect to the vertical direction (gravity direction). The elastic member 34 and the transmission member 31 may apply a force in a direction intersecting the upright direction to the swinging part 32 (i.e., the direction of the force applied by the elastic member 34 and the transmission member 31 to the swinging part 32 may be perpendicular to the upright direction in which the rotation axis of the swinging part 32 is located, or may be inclined with respect to the upright direction in which the rotation axis of the swinging part 32 is located), such that the swinging part 32 can swing reciprocally under the force applied by the elastic member 34 and the pushing arm 312 of the transmission member 31 to realize the switching of the swinging part 32 between the locked position and the released position.

In an exemplary embodiment, the rotation axis of the swinging part 32 is vertically arranged, and the elastic member 34 and the pushing arm 312 are horizontally arranged and are respectively located on two sides of the swinging part 32. The elastic member 34 is located on a side of the swinging part 32 away from the operation button (rotation 2), and the transmission member 31 is located on a side of the swinging part 32 close to the operation button (rotation 2). The elastic member 34 and the transmission member 31 are configured such that the force applied to the swinging part 32 is perpendicular to the rotation axis of the swinging part 32.

After the mounting holder 100 is mounted on the mounting base body 200, the rotation axis of the swinging part 32 is vertically arranged (i.e., extending in an up-down direction in FIG. 16, and the rotation axis of the swinging part 32 can completely coincide with the gravity direction). The elastic member 34 and the pushing arm 312 are respectively located on two sides of the swinging part 32, and the elastic member 34 and the pushing arm 312 are horizontally arranged (the elastic member 34 and the pushing arm 312 can be completely horizontal or inclined at an angle with respect to the horizontal direction) so as to apply a horizontal force to wall surfaces on two sides of the swinging part 32. This horizontal force is perpendicular to the rotation axis of the swinging part 32, and the swinging part 32 can rotate around the vertical rotation axis under the action of this horizontal force, so as to achieve the switching of the swinging part 32 between the locked position and the released position.

In some exemplary embodiments, as shown in FIGS. 4 and 12, the locking surface 332 of the locking part 33 includes a first edge 333 and a second edge 334 extending in the direction of the rotation axis of the swinging part 32. The rotation axis of the swinging part 32 (that is, a central axis of the rotating shaft part 321 of the swinging part 32) is located on a side of the first edge 333 away from the second edge 334.

The rotation axis of the swinging part 32 is located on a side of the first edge 333 away from the second edge 334, such that during the rotation of the swinging part 32 for locking (switching from the released state shown in FIG. 7 or FIG. 9 to the locked state shown in FIG. 4), the locking surface 332 of the locking part 33 as a whole undergoes a gradual increase in the degree of pressing against the mounting base body 200, which is beneficial to ensuring the firm locking between the locking part 33 and the mounting base body. During the rotation of the swinging part 32 for unlocking (switching from the locked state shown in FIG. 4 to the released state shown in FIG. 7 or FIG. 9), the locking surface 332 of the locking part 33 as a whole undergoes a gradual decrease in the degree of pressing against the mounting base body 200, thereby facilitating the position adjustment of the mounting holder 100.

The rotation axis of the swinging part 32 may be located on a side of the first edge 333 away from the second edge 334, or may be located at other locations. For example, the rotation axis of the swinging part 32 may be located between the first edge 333 and the second edge 334, or the rotation axis of the swinging part 32 may be located on a side of the second edge 334 away from the first edge 333.

In some exemplary embodiments, as shown in FIGS. 1 to 5, 7, 9, and 16 to 17, the mounting holder 100 further includes a mounting seat 5. The mounting seat 5 is mounted to a side of the base 1 close to the elastic member 34, and the mounting seat 5 is configured to mount members to be mounted.

The mounting seat 5 of the mounting holder 100 is mounted to the base 1 and is located on a side close to the elastic member 34 of the locking mechanism 3 and away from the knob 2, and the mounting seat 5 can be used for mounting the members to be mounted, such as the shower head. The mounting seat 5 may be provided with a mounting groove 51 for mounting the members to be mounted, such as the shower head.

In other exemplary embodiments, the base may include a mounting part located on a side of the locking member away from the operation button, and the mounting part is configured to mount the members to be mounted.

The mounting part and the base may have an integral structure, for example, the mounting part for mounting the members to be mounted, such as the shower head, may be formed by opening a hole in the base.

In some exemplary embodiments, the mounting seat 5 and the locking member are located on the same side of the mounting hole of the base 1. This arrangement ensures that after the members to be mounted, such as the shower head, are mounted to the mounting seat 5 and the mounting base body 200 is mounted into the mounting hole of the base 1, the mounting seat 5 and the members to be mounted, such as the shower head, the swinging part 32 of the locking member and the locking part 33 of the locking member thereon are located on the same side of the mounting base body 200.

When an external force F in the downward direction indicated by the arrow in FIG. 17 (a) is applied at the position of the mounting seat 5, the mounting holder 100 is inclined (as shown in FIG. 17 (b)), such that the mounting base body 200 reacts on the locking part 33 of the locking mechanism 3. At this time, due to the rotational connection between the swinging part 32 (to which the locking part 33 is mounted) and the base 1, with the rotation axis vertically arranged, under the action of the rotational pivot point between the swinging part 32 and the base 1, the swinging part 32 and the locking part 33 will not retreat under the action of the mounting base body 200. Instead, they react on the mounting base body 200, such that a lower end of the locking part 33 more tightly presses against the mounting base body 200. This increases the pressing force between the mounting base body 200 and the locking part 33, resulting in the greater friction force between them, and the lever design is also enhanced, such that a larger pressing force can be increased at the position of the mounting seat 5 without applying too much force.

Due to the design of a reverse lever pressing force between the mounting holder 100 and the mounting base body 200, the locking force between the mounting base body 200 and the locking part 33 will also be increased under the action of the gravity of the shower head (such as the external force F) after the members to be mounted, such as the shower head, are mounted to the mounting seat 5. This eliminates the need for the elastic member 34 to be designed with too much elastic force, thereby increasing the service life of each component of the mounting holder 100.

In some exemplary embodiments, as shown in FIGS. 1 to 3, 5, 14, and 16 to 17, the base 1 includes an outer shell 11 and an inner shell 12 mounted in the outer shell 11. Both the outer shell 11 and the inner shell 12 are provided with mounting holes that are mounted and matched with the mounting base body 200, the knob 2 is connected to the inner shell 12, and the locking mechanism 3 is mounted in the inner shell 12.

In the base 1, the outer shell 11 and the inner shell 12 may be cylindrical as a whole, and the outer shell 11 and the inner shell 12 can be fixedly connected (for example, fixedly connected by a buckle, etc.). An annular side wall of the outer shell 11 is provided with two mounting holes (that is, first mounting holes 111, as shown in FIGS. 1 to 3 and 5), and the two first mounting holes 111 can be oppositely arranged. An annular side wall of the inner shell 12 is provided with two mounting holes (i.e., second mounting holes 124, as shown in FIG. 14), and the two second mounting holes 124 can be oppositely arranged. The mounting base body 200 may pass through the first mounting holes 111 and the second mounting holes 124, such that the mounting base body 200 may pass through the base 1. The locking mechanism 3 is mounted in the inner shell 12, such that the locking part 33 of the locking mechanism 3 can be press-fitted with a portion of the mounting base body 200 located in the inner shell 12 to realize the locking fit between the mounting holder 100 and the mounting base body 200. The knob 2 is connected to the inner shell 12, and the knob 2 is rotatable relative to the inner shell 12 to realize a rotatable connection between the knob 2 and the base 1.

In some exemplary embodiments, as shown in FIG. 14, one end of the inner shell 12 is provided with a plurality of hooks 121 (e.g., three or other numbers), and the plurality of hooks 121 may be uniformly distributed along a circumferential direction of the inner shell 12. As shown in FIG. 11, an annular side wall of the knob 2 is provided with a plurality of chutes 22 (e.g., three or other numbers), the plurality of chutes 22 can be uniformly distributed along a circumferential direction of the annular side wall, and each chute 22 can extend along the circumferential direction of the annular side wall. The plurality of hooks 121 can be clamped into the plurality of chutes 22 in one-to-one correspondence, and can slide in the plurality of chutes 22 to realize the rotational connection between the knob 2 and the inner shell 12, such that the knob 2 is rotatable relative to the base 1.

As shown in FIGS. 4, 7, and 9, in the locking mechanism 3, the drive-matching parts 311 of the transmission member 31 are located between the inner shell 12 and the knob 2, and the pushing arm 312 of the transmission member 31 may be located between an outer wall surface of the inner shell 12 and an inner wall surface of the outer shell 11. As shown in FIGS. 6, 8 and 10, the pushing arm 312 is provided with a first guiding part 313, and the outer wall surface of the inner shell 12 (or the inner wall surface of the outer shell 11) is provided with a second guiding part 123. The first guiding part 313 and the second guiding part 123 can be matched for guiding, such that the transmission member 31 translates in the first translation direction under the driving of the driving part 211. The first guiding part 313 may be a guiding groove, and the second guiding part 123 may be a guiding protrusion matched with the guiding groove. Alternatively, the first guiding part 313 may be a guiding protrusion, and the second guiding part 123 may be a guiding groove matched with the guiding protrusion.

As shown in FIGS. 4 to 5, 7 and 9, the locking member is disposed in the inner shell 12 and located on a side away from the knob 2. As shown in FIG. 14, the inner shell 12 is provided with a shaft hole 122 for realizing the rotational connection between the swinging part 32 of the locking member and the base 1.

As shown in FIGS. 4 to 5, 7 and 9, the mounting seat 5 can be fixedly connected to the outer shell 11 of the base 1. For example, the mounting seat 5 can be fixed to the outer shell 11 by screws 6, and a rubber gasket 7 can be provided between the mounting seat 5 and the outer shell 11.

In some exemplary embodiments, as shown in FIGS. 3 to 5, 7 and 9, the mounting holder 100 further includes a sheath 4. The sheath 4 can be mounted in the inner shell 12 of the base 1, the sheath 4 is provided with two mounting holes (i.e., third mounting holes 41, as shown in FIG. 15) through which the mounting base body 200 passes, and the two third mounting holes 41 can be oppositely arranged. The mounting base body 200 may pass through the first mounting holes 111, the second mounting holes 124, and the third mounting holes 41. The sheath 4 is also provided with an avoidance hole 42 (as shown in FIG. 15). The locking surface 332 of the locking part 33 may pass through the avoidance hole 42, such that the locking surface 332 is press-fitted with an outer wall surface of a portion of the mounting base body 200 that passes through the sheath 4, so as to realize the locking fit between the mounting holder 100 and the mounting base body 200.

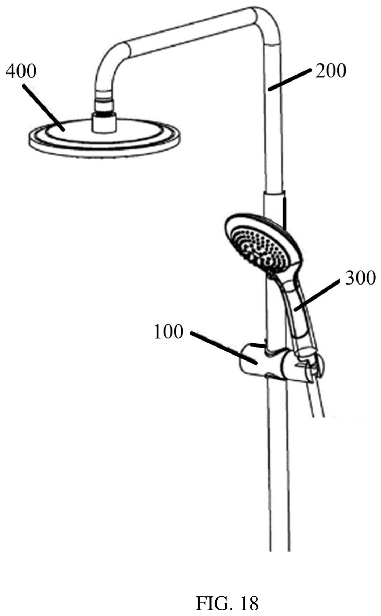

An embodiment of the present application also provides a shower head assembly, as shown in FIG. 18, including a shower head and the mounting holder 100 provided in any of the above embodiments. The locking mechanism 3 of the mounting holder 100 is configured to be able to be lockingly matched with or unlocked from the mounting base body 200, and the shower head is configured to be able to be mounted to the mounting holder 100.

In the shower head assembly, the shower head can be mounted to the mounting holder 100, and the locking mechanism 3 of the mounting holder 100 can be unlocked from the vertical mounting base body 200 to adjust the positions of the mounting holder 100 and the shower head. The locking mechanism 3 of the mounting holder 100 can also be lockingly matched with the mounting base body 200 (as shown in FIGS. 16 to 18), so as to fix the mounting holder 100 and the shower head in position and facilitate the user to use the shower head.

In some exemplary embodiments, as shown in FIG. 18, the shower head mounted to the mounting holder 100 may be a hand-held shower head 300. The shower head assembly may further include a top spray shower head 400 and the mounting base body 200, and the top spray shower head 400 is mounted to the mounting base body 200, for example, may be mounted at the top of the mounting base body 200.

It should be understood that the mounting holder 100 may be used to mount the shower head, or may be used to mount other members to be mounted as desired. The mounting base body 200 lockingly fixed to the mounting holder 100 may be arranged vertically, or may be arranged horizontally or inclined as required.

In the description of the present application, it should be noted that the transmission connection/transmission matching of two components means that one component can drive the other component to move. Here, the two components can only be in contact without connection, in this case, one component can push the other component to move, and/or the other component can push the one component to move. Alternatively, a connection may exist between two components, in this case, one component may drive (e.g., push or pull) the other component to move, and/or the other component may drive the one component to move.

In the description of the present application, it should be noted that the orientation or positional relationships indicated by the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", "one side", "the other side", "one end", "the other end", "side", "opposite", "four corners", "periphery" and the like are based on the orientation or positional relationships shown in the drawings, which are only for convenience of describing the present disclosure and simplifying the description, rather than indicating or implying that the referred structure has the specific orientation, or is constructed and operated in the specific orientation, and thus cannot be interpreted as a limitation on the present disclosure.

In the description of the present application, "multiple/a plurality of" means at least two, for example, two, three and the like, unless expressly specified otherwise.

In the description of the present application, unless otherwise expressly specified and limited, the terms "mount", "couple", "connect", "fix" and the like should be understood in a broad sense. For example, it may be a fixed connection, a detachable connection or an integrated connection; it may be a mechanical connection or an electrical connection; it may be a direct connection or an indirect connection through an intermediate medium, or an internal communication between two elements, or an interaction relationship between two elements, unless otherwise expressly defined. For those of ordinary skill in the art, specific meanings of the above terms in the present application can be understood according to specific situations.

In the present application, unless otherwise expressly specified and limited, the first feature being "above" or "below" the second feature may be a direct contact between the first and second features, or an indirect contact between the first and second features via an intermediate medium. Moreover, the first feature being "on", "above" and "over" the second feature may be the first feature being directly above or obliquely above the second feature, or simply indicate that the level of the first feature is higher than that of the second feature. The first feature being "under", "below" and "underneath" the second feature may mean that the first feature is directly below or obliquely below the second feature, or simply mean that the level of the first feature is lower than that of the second feature.

In the description of this specification, descriptions with reference to terms "one embodiment", "some embodiments", "example", "specific example", or "some examples", and the like mean that specific features, structures, materials, or characteristics described in conjunction with the embodiment or example are included in at least one embodiment or example of the present application. In this specification, the schematic illustration of the above terms does not need to be directed to the same embodiments or examples. Further, the specific features, structures, materials, or characteristics described may be combined in a suitable manner in any one or more embodiments or examples. Further, those skilled in the art may incorporate and combine different embodiments or examples and features of different embodiments or examples described in this specification if there is no conflict.

Although the implementations of the present disclosure are disclosed above, the described contents are only the implementations adopted for facilitating understanding of the present disclosure, which are not intended to limit the present disclosure. It should be noted that the above embodiments or implementations are exemplary only and not limiting. Therefore, the present disclosure is not limited to what is specifically shown and described herein. Various modifications, substitutions or omissions may be made to the form and details of implementation without departing from the scope of the present disclosure.

## Claims

1. A mounting holder, comprising:
a base provided with a mounting hole, the mounting hole being configured to accommodate a mounting base body for mounting and matching with the mounting holder;
a locking mechanism mounted on the base, the locking mechanism comprising a locking member and a transmission member, the locking mechanism being configured to be able to be in a locked state, such that the locking member is able to lock the mounting base body; and
an operation button movably mounted on the base, the operation button and the locking member being located on two sides of the mounting hole, respectively, the transmission member being arranged between the operation button and the locking member, the operation button being in transmission connection with the locking member by the transmission member, and the operation button being configured to be able to drive the locking member to move by the transmission member when moving, such that the locking mechanism is able to be in a released state, thereby enabling the locking member to be unlocked from the mounting base body.

2. The mounting holder of claim 1, wherein the locking member comprises a swinging part rotatably connected to the base and a locking part disposed on the swinging part;
the locking mechanism further comprises an elastic member disposed between the swinging part and the base; and
the swinging part is configured to be able to be in a locked position under an action of an elastic force of the elastic member, such that the locking part is able to be lockingly matched with the mounting base body; and the swinging part is also configured to be rotatable to a released position in a first rotation direction against the elastic force of the elastic member under pushing of the transmission member, such that the locking part is able to be unlocked from the mounting base body.

3. The mounting holder of claim 2, wherein a rotation axis of the swinging part extends in an upright direction, and the elastic member and the transmission member are configured to be able to apply a force in a direction intersecting the upright direction to the swinging part; and
wherein the elastic member is located on a side of the swinging part away from the operation button, the transmission member is located on a side of the swinging part close to the operation button, and the transmission member is slidably matched with the base.

4. The mounting holder of claim 2, wherein a rotation axis of the swinging part is vertically arranged, and the elastic member and the transmission member are configured such that a direction of a force applied to the swinging part is perpendicular to the rotation axis of the swinging part; and
wherein the elastic member is located on a side of the swinging part away from the operation button, the transmission member is located on a side of the swinging part close to the operation button, and the transmission member is slidably matched with the base.

5. The mounting holder of any one of claims 2 to 4, wherein the locking part comprises a locking surface for press-fitting with the mounting base body, the locking surface comprises a first edge and a second edge extending in a direction of a rotation axis of the swinging part, and the rotation axis of the swinging part is located between the first edge and the second edge, or the rotation axis of the swinging part is located on a side of the first edge away from the second edge, or the rotation axis of the swinging part is located on a side of the second edge away from the first edge.

6. The mounting holder of any one of claims 2 to 5, wherein a distance between the elastic member and a rotation axis of the swinging part is smaller than a distance between the transmission member and the rotation axis of the swinging part; and/or
the operation button is a knob and comprises a rotating force application part for operating and a driving part for driving the transmission member to move, wherein a distance between the rotating force application part and a rotation axis of the knob is larger than a distance between the driving part and the rotation axis of the knob.

7. The mounting holder of any one of claims 1 to 5, wherein the operation button comprises a driving part, one end of the transmission member is provided with a drive-matching part in transmission matching with the driving part, and the other end of the transmission member extends beyond the mounting hole and is in transmission matching with the locking member; or
the transmission member and the operation button are of a split structure, and one end of the transmission member is connected with the operation button, and the other end of the transmission member extends beyond the mounting hole and is in transmission matching with the locking member; or
one end of the transmission member is integrally formed with the operation button, and the other end of the transmission member extends beyond the mounting hole and is in transmission matching with the locking member.

8. The mounting holder of any one of claims 2 to 7, wherein the transmission member is slidably matched with the base, and the transmission member is configured to be slidable in a first direction relative to the base under driving of the operation button to unlock the locking member from the mounting base body; the transmission member is also configured to be slidable relative to the base in a direction opposite to the first direction under an action of the elastic member.

9. The mounting holder of any one of claims 2 to 7, wherein the transmission member is slidably matched with the base, and the transmission member is configured to be translationally movable relative to the base in a first translation direction under driving of the operation button to unlock the locking member from the mounting base body; and the transmission member is also configured to be translationally movable relative to the base in a direction opposite to the first translation direction under an action of the elastic member.

10. The mounting holder of any one of claims 1 to 9, wherein the operation button is a knob and comprises two driving parts, and a driving part of the two driving parts comprises a driving surface; one end of the transmission member is provided with two drive-matching parts that are respectively in transmission matching with the two driving parts, the drive-matching parts comprise drive-matching surfaces, and along a direction away from the knob, the drive-matching surfaces of the two drive-matching parts are inclined towards a direction close to a rotation axis of the knob;
the knob is provided with a protruding post, the two driving parts are disposed at a protruding end of the protruding post, and the driving surface of each driving part is configured to be tangent to the drive-matching surfaces of the two drive-matching parts when the locking mechanism is in the locked state; and
an end surface of the protruding end of the protruding post comprises two avoidance ramps located between the two driving parts, and the two avoidance ramps are configured to face the drive-matching surfaces of the two drive-matching parts respectively when the locking mechanism is in the locked state.

11. The mounting holder of claim 10, wherein the knob further comprises a knob body rotatably connected to the base, the knob body is connected to the driving parts, and a central axis of the knob body coincides with the rotation axis of the knob.

12. The mounting holder of any one of claims 1 to 11, wherein the mounting holder further comprises a mounting seat mounted to the base and located on a side of the locking member away from the operation button, and the mounting seat is configured to mount a member to be mounted; or
the base comprises a mounting part located on the side of the locking member away from the operation button, and the mounting part is configured to mount the member to be mounted.

13. The mounting holder of claim 12, wherein the member to be mounted is a mounting shower head, and the mounting base body is a mounting rod for mounting the shower head.

14. A shower head assembly comprising a shower head and the mounting holder of any one of claims 1 to 13, wherein the locking mechanism of the mounting holder is configured to be able to be lockingly matched with or unlocked from the mounting base body, and the shower head is configured to be mountable to the mounting holder.

15. The shower head assembly of claim 14, wherein the shower head mounted to the mounting holder is a hand-held shower head, the shower head assembly further comprises a top spray shower head and the mounting base body, and the top spray shower head is mounted to the mounting base body.
